# EUROPEAN PATENT APPLICATION

(11) **EP 2 343 914 A1**
(43) Date of publication of application: **13.07.2011**
(21) Application number: 09771262.4
(22) Date of filing: 10.06.2009
(51) Int. Cl.: H04W 4/14, H04W 4/18

(54) **METHOD, DEVICE AND CORRESPONDING SYSTEM FOR MESSAGE PROCESSING**

(30) Priority: 12.09.2008 CN 200810149593
(71) Applicant: Huawei Technologies Co., Ltd., Longgang District, Shenzhen Guangdong 518129 (CN)
(72) Inventor: CHEN, Dagang, Shenzhen Guangdong 518129 (CN); DUAN, Haifeng, Shenzhen Guangdong 518129 (CN); LI, Yimin, Shenzhen Guangdong 518129 (CN)
(74) Representative: Barth, Stephan Manuel
(86) International application number: PCT/CN2009/072206
(87) International publication number: WO 2010/028551

(57) **Abstract**

A message processing method, device, and system are provided in the embodiments of the present invention. The method comprises: receiving service messages and identifying the protocol type of the service messages; performing protocol adaptation according to the protocol type; and reconstructing the content of the service messages after protocol adaptation according to the corresponding content reconstructing policies and sending the service messages after content reconstructing. The present invention implements information embedment into the content over different protocols without proxy server settings.

## Description

### FIELD OF THE INVENTION

The present invention relates to communications technologies, and in particular, to a method, device, and system for message processing.

### BACKGROUND

With the deployment of IP-based telecommunications networks, visits of data services and the number of users grow exponentially, and data services are increasingly diversified. Due to the massive amount of data and tens of thousands of bearer protocols on backbone networks, telecom operators are increasingly reduced to channel providers. To strengthen regulation of the telecom sector and allow operators to hold sway over the data service value chain, service access must be brought under control. In addition, terminal type-based adaptation of content provided by Service Providers/Content Providers (SPs/CPs) or embedment of advertisements and prompts enable operators to deploy value-added services without degrading user experience.

The access network-based information embedment technology is an effective solution. When a user accesses a service, the Network Access Server (NAS) receives an access request and forwards the user information, such as mobile number and source IP address, to the Application Server (AS) of the SP/CP according to the access attributes (such as user type and access information, for example, the target and whether the user accesses the service for the first time) of the user and the established policy. After receiving the response from the AS, the NAS resolves the information content, inserts advertisements in unnoticeable areas or embeds prompts (such as weather report) in noticeable areas, re-encapsulates the content, and sends it back to the user.

The prior art uses a special NAS, such as a WAP gateway, to embed the information. The address of the NAS (such as the WAP gateway) should be first set on the terminal. When a connection is established between the terminal and the network, the terminal sends a WAP service request. The request passes through the telecom access network to the service network, and is routed to the specified WAP gateway. The WAP gateway inserts the mobile number, terminal IP address, and terminal type of the user to the converted HTTP header according to the target server address and the policy preset by the operator, and then sends the packet to an Internet/Intranet server. The Internet/Intranet server generates a response and sends it to the WAP gateway. The WAP gateway converts the page, image, and character formats according to the terminal type, analyzes the page, embeds the specified advertisement or other information in the blank area, and sends the page to the terminal.

The following defects in the conventional art have become apparent:

The terminal needs to support address configuration for the service access gateway. Different service access gateway addresses should be configured for services over different protocols because each service access gateway processes a single protocol type.

### SUMMARY

A message processing method, device, and system are provided by the present invention to dynamically embed user information, advertisements, and prompts in the content of data services (including browsing services) in multi-protocol service messages.

As a first aspect of the invention the message processing method comprises in one implementation form:
receiving a service message and identifying the protocol type of the service message;
sending the service message to a protocol adaptation module according to the protocol type; and
reconstructing the service message processed by the protocol adaptation module according to the corresponding content reconstructing policy, and sending the reconstructed service message.

As a second aspect of the invention the message processing device is provided. The device comprises in an implementation form thereof a protocol identification module, a content reconstructing module, and several protocol adaptation modules, where,
the protocol identification module is adapted to identify the protocol type of a service message;
the protocol adaptation module is adapted to process the protocol identified by the protocol identification module; and
the content reconstructing module is adapted to reconstruct the content of the service message processed by the protocol adaptation module according to the corresponding content reconstructing policy.

As a third aspect of the invention the message processing system comprises in an implementation form thereof a message processing device and a server, where,
the message processing device is adapted to: receive service messages from terminals or the server; identify the protocol type of service messages; send service messages to the corresponding protocol adaptation modules; reconstruct the content of processed service messages according to the corresponding content reconstructing policy; and send service messages with reconstructed content to the destination servers or terminals; and
the server is adapted to receive service messages processed by the message processing device and send service messages to the message processing devices.

The technical solution provided by the present invention has the following advantages: Message processing and content reconstruction are based on protocol type to embed content over different protocols without proxy server settings on terminals.

### BRIEF DESCRIPTION OF THE DRAWINGS

To clarify the technical solution of the present invention, preferred embodiments thereof are described below with reference being made to the accompanying drawings. Obviously, the following drawings are particular embodiments of the present invention only.
FIG. 1A shows the structure of a message processing system provided in an embodiment of the present invention;
FIG. 1B shows the structure of a message processing system provided in an embodiment of the present invention;
FIG. 2 shows the structure of a message processing system provided in an embodiment of the present invention;
FIG. 3 shows the structure of a message processing system provided in an embodiment of the present invention;
FIG. 4 is a flowchart of a message processing method provided in an embodiment of the present invention;
FIG. 5 shows the implementation of a message processing system provided in an embodiment of the present invention; and
FIG. 6 is a flowchart of a message processing method provided in an embodiment of the present invention.

### DETAILED DESCRIPTION

The following section details the complete technical solution provided in the embodiments of the present invention. Obviously, only part of the embodiments of the present invention is discussed herein. Other embodiments may be obtained by those skilled in the art.

A new message processing method, device, and system are provided in the embodiments of the present invention to dynamically embed advertisements and prompts into the content of various data services, such as browsing services.

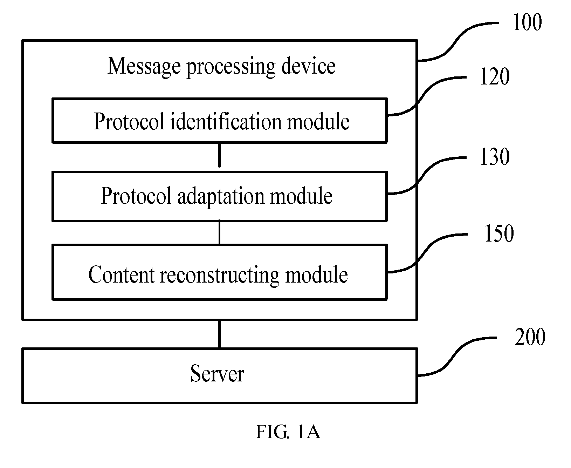

FIG. 1A shows the structure of a message processing system provided in an embodiment of the present invention. The system comprises a message processing device 100 and a server 200.

The message processing device 100 is adapted to receive service messages from terminals or the server 200, identify the protocol type of the service messages, send the service messages to the corresponding protocol adaptation module 130, reconstruct the content of the processed service messages according to the corresponding content reconstructing policy; and send the reconstructed service messages to the destination servers or terminals.

A service request message can be a service request, service response, and service notification. These messages are detailed below:
Service requests are sent from terminals to the server 200. The data service software programs preinstalled on terminals correspond to different service request content and protocol types. The data service software includes applications, such as WAP browser, email receiving/sending terminals, media player, and instant messengers.
Service responses refer to messages from the server 200 in response to service requests from terminals according to the processing results of the requested services.
Service notification is sent from the server 200 to terminals. Different from the foregoing messages, service notification is actively originated by server 200, which generates one-way instructions from the server 200 to terminals. Terminals may opt not to respond to service notification or to choose from the options provided in the service notification as required. Such changes do not affect the scope of the present invention.

The message processing device 100 further comprises a protocol identification module 120, protocol adaptation module 130, and content reconstructing module 150.

The protocol identification module 120 is adapted to identify the protocol type of the service messages after address translation by the address translation module 110 and send the service messages to the corresponding protocol adaptation module 130 according to the protocol type.

The protocol adaptation module 130 is adapted to process the service messages according to the protocol type identified by the protocol identification module 120. That is to say, the protocol adaptation module 130 is adapted to encapsulate or decapsulate the service message according to the protocol type identified by the protocol identification module 120.

Note that this system includes one or more protocol adaptation modules 130, each of which processes the service messages of a specific protocol.

The content reconstructing module 150 is adapted to reconstruct the content of service messages after protocol processing according to the corresponding content reconstructing policy.

The server 200 is adapted to receive the processed service requests from the message processing device 100 and send service responses or notification to the message processing device 100.

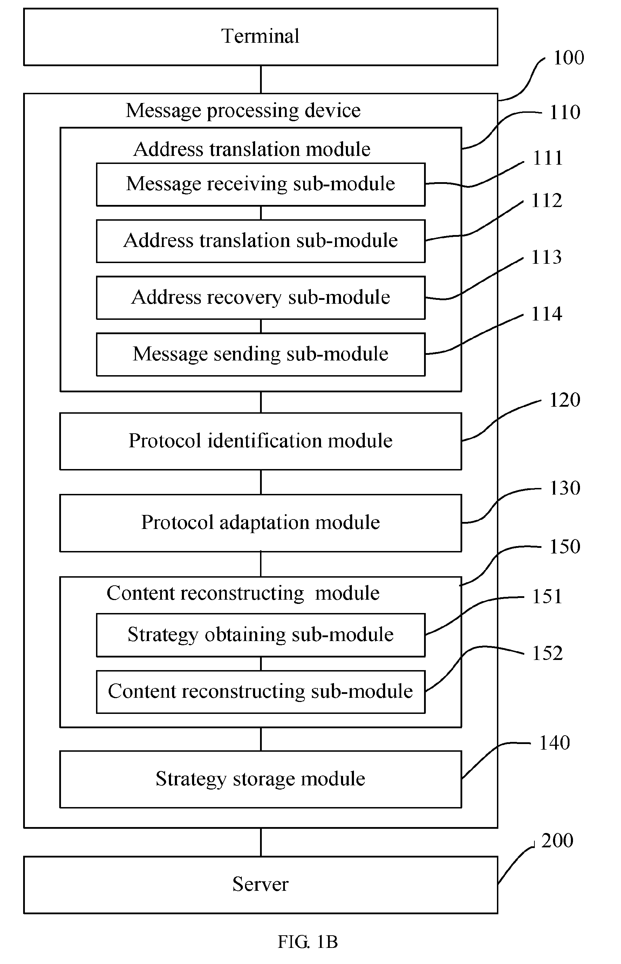

As shown in FIG. 1B, the embodiment of the present invention can also include the policy storage module 140, which is adapted to store the content reconstructing policies preset according to protocol type or service message type.

The content reconstructing module 150 reconstructs the content of the service messages after protocol adaptation by the protocol adaptation module 130 according to the corresponding content reconstructing policies of the service messages stored in the policy storage module 140.

The content reconstructing solution is implemented according to the content reconstructing policy stored in the policy storage module 140. The content reconstructing module 150 includes the following sub-modules:
policy obtaining sub-module 151, adapted to obtain the corresponding content reconstructing policies of the service messages from the policy storage module 140; and
content reconstructing sub-module 152, adapted to reconstruct the content of the service messages according to the corresponding content reconstructing policies of the service messages obtained by the policy obtaining sub-module 151. That is, the content reconstructing sub-module 152 performs the following content processing according to the specific bearer protocol: content analysis, content filtering, key information embedment, and advertisement embedment.

The embodiment of the present invention identifies the protocol type of service messages and processes the service messages through the corresponding protocol adaptation modules to embed information into content over different protocols.

The embodiment of the present invention can also include an address translation module 110, adapted to:
receive service messages, translate the destination addresses of the service messages into the local addresses (namely, translate the IP addresses of the destination servers into the IP address of the message processing device 100), and retain the mapping between the addresses before and after translation so that the service messages can be forwarded to other modules of the message processing device 100 for further processing; and
restore the destination addresses of the processed service messages, that is, translate the IP address of the message processing device 100 into the IP addresses of the destination servers, according to the mapping between the service message addresses before and after translation kept hereinbefore, send the processed service messages to the destination addresses.

The foregoing process implements service message processing and sending to the destination addresses along the original paths without a proxy server. Therefore, the sending processes and destinations of the service messages remain unchanged during service message processing.

Specifically, the address translation module 110 comprises the following sub-modules:
a message receiving sub-module 111, adapted to receive service requests from terminals, and service responses or notifications from the server 200;
an address translation sub-module 112, adapted to translate the destination addresses of the service messages received by the message receiving sub-module 111 into the local addresses (namely, translate the IP addresses of the destination servers into the IP address of the message processing device 100) and record the mapping between server addresses and local addresses;
an address recovery sub-module 113, adapted to recover the destination addresses of the service messages (namely, translate the IP address of the message processing device 100 into the IP addresses of the destination servers); and
a message sending sub-module 114, adapted to send service messages to the destination addresses recovered by the address recovery sub-module 113, including sending the processed service requests to the server 200 and processed service responses or notifications to terminals.

This embodiment translates the destination addresses of service messages into local addresses so that the upper-layer application can receive the original service requests and the identification module 120 can identify the service messages.

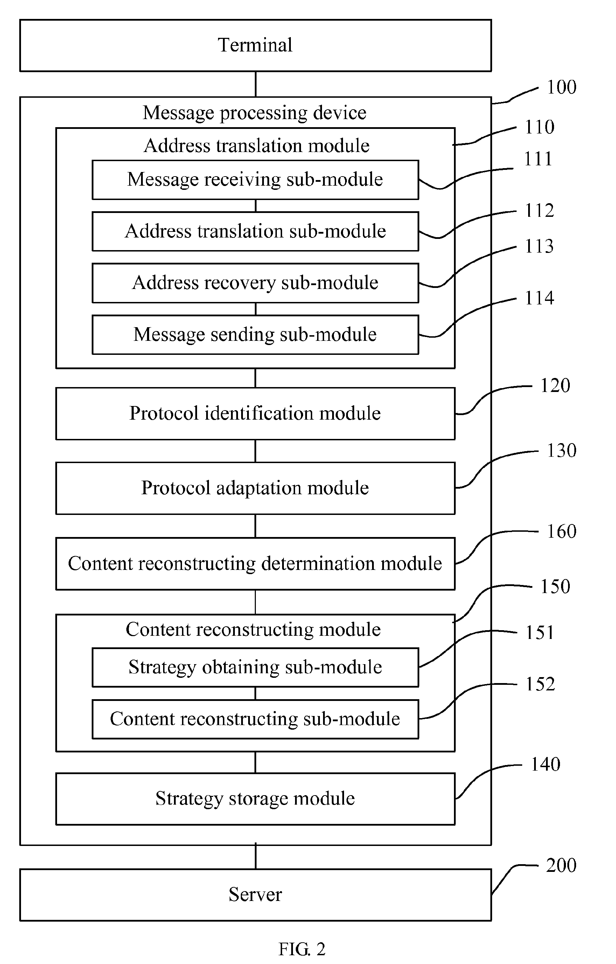

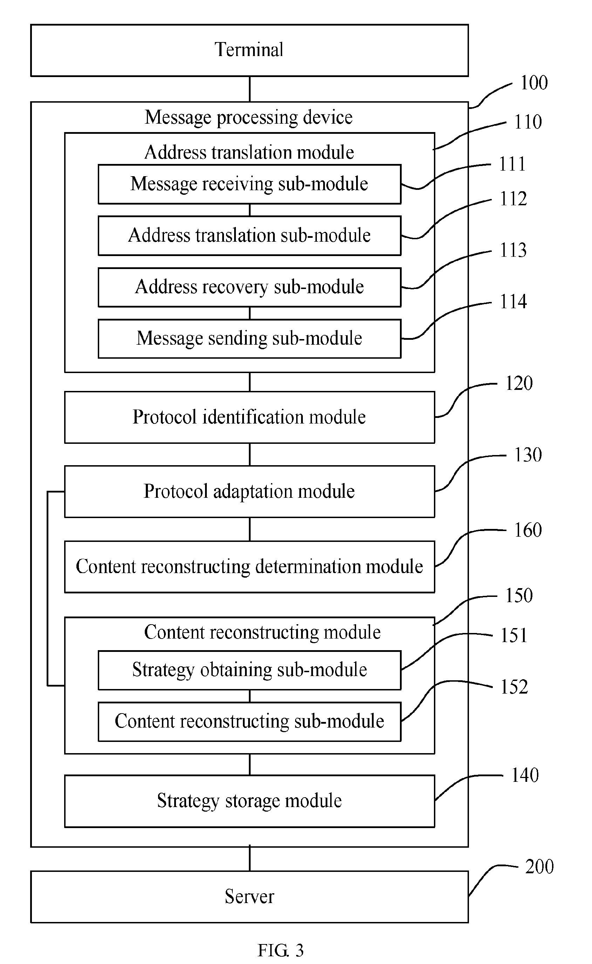

Further, as shown in FIG. 2 and FIG. 3, the message processing device 100 can also comprise a content reconstruction judgment module 160. The module is adapted to determine whether to reconstruct content of the service messages processed by the protocol adaptation module 130 and, if so, the content reconstructing module 150 should perform content reconstruction. For example, the content reconstruction judgment module 160 can determine whether to reconstruct the content of a service message according to the priority of the message.

Specifically, the design works in the following procedure: the protocol adaptation module 130 sends the processed service message or its related information to the content reconstruction judgment module 160, which then determines whether to reconstruct the content of the service message according to the preset rule.

If the content reconstruction judgment module 160 determines to reconstruct the content, it sends the service message received from the protocol adaptation module 130 to the content reconstructing module 150, or notifies the protocol adaptation module 130 to send the processed service message to content reconstructing module 150 according to the received information related to the service message.

If the content reconstruction judgment module 160 determines not to reconstruct the content, neither the content reconstruction judgment module 160 nor the protocol adaptation module 130 sends the service message to the content reconstructing module 150 so that content reconstruction is not performed.

The foregoing description shows that the content reconstruction judgment module 160 in the message processing device 100 can be deployed in the following two modes:
Mode 1: As shown in FIG. 2, the content reconstruction judgment module 160 is deployed between the protocol adaptation module 130 and the content reconstructing module 150 and is connected to the protocol adaptation module 130 and the content reconstructing module 150 respectively. When the content reconstruction judgment module 160 receives a processed service message from the protocol adaptation module 130 and determines to reconstruct the content, it sends the processed service message to the content reconstructing module 150.
Mode 2: As shown in FIG. 3, the content reconstruction judgment module 160 is separately deployed next to the protocol adaptation module 130 but is not connected to the content reconstructing module 150. When the content reconstruction judgment module 160 receives the related information of the processed service message from the protocol adaptation module 130, it determines whether to reconstruct the content of the service message. If the content reconstruction judgment module 160 determines to reconstruct the content of the service message, it notifies the protocol adaptation module 130 to send the service message to the content reconstructing module 150.

In Mode 2, the content reconstruction judgment module 160 can also be deployed in the protocol adaptation module 130 as a sub-module to implement protocol processing and content reconstruction judgment at the same time. Such change does not affect the scope of the present invention.

Obviously, the foregoing description relating to the content reconstruction judgment module 160 is an embodiment of the present invention. The presence or absence of the content reconstruction judgment module 160 and its deployment mode do not affect the scope of the present invention.

This embodiment determines whether to reconstruct the content of service messages to implement selective content reconstruction and avoid delaying critical or emergent service messages by content reconstruction.

In practice, the access gateway serves as the message processing device 100 and the server of SP/CP serves as the server 200.

The previous modules can be deployed on one or more devices. These modules can be integrated into one module or be divided into several sub-modules.

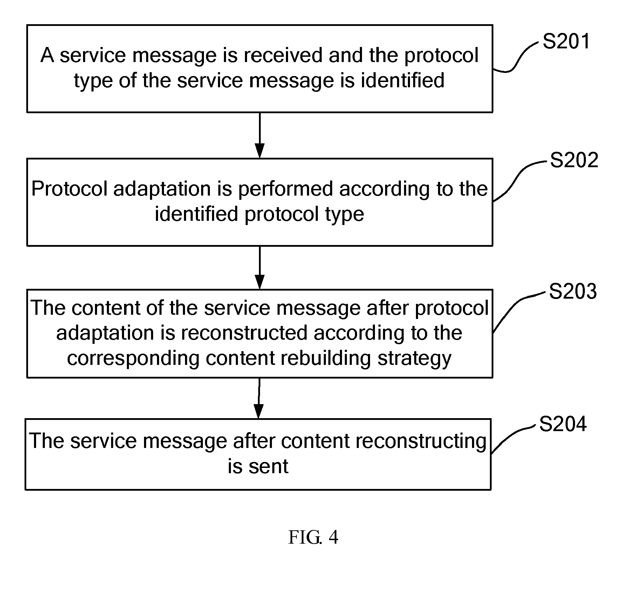

Based on the forgoing system, a message processing method is provided in an embodiment of the present invention. FIG. 4 is the flowchart of the method, comprising the following steps:
S401: A service message is received and the protocol type of the service message is identified.

The service message can be a service request, a service response, or a service notification. Protocol type is identified through the Deep Packet Inspection (DPI) technology.

Further, after the service message is received, the destination address of the service message is translated into the local address.
S402: According to the protocol type, the service message is sent to the corresponding protocol adaptation module.
   The service messages based on different protocol types are sent to the corresponding protocol adaptation module, which in turn encapsulates or decapsulates the content of the service messages.
S403: The content of the service message after protocol adaptation is reconstructed according to the corresponding content reconstructing policy.

The content reconstructing process comprises:
obtaining the corresponding content reconstructing policy of the service message; and
reconstructing the content of the service message according to the content reconstructing policy.

The content reconstructing policy is preset according to the protocol type or service message type. The content of a service message is reconstructed to embed information into the message.

Further, prior to this step, a judgment can be made about whether to reconstruct the content of the service message. If reconstruction is required, the corresponding content reconstructing policy of the service message can be obtained; otherwise, content reconstruction is not performed.
S404: The service message after content reconstruction is sent.

The service message sending process after content reconstruction comprises:
restoring the destination address of the service message; and
sending the service message after content reconstruction to the destination address.

A protocol-specific message content reconstructing method is provided in an embodiment of the present invention to embed information in the content over different protocols.

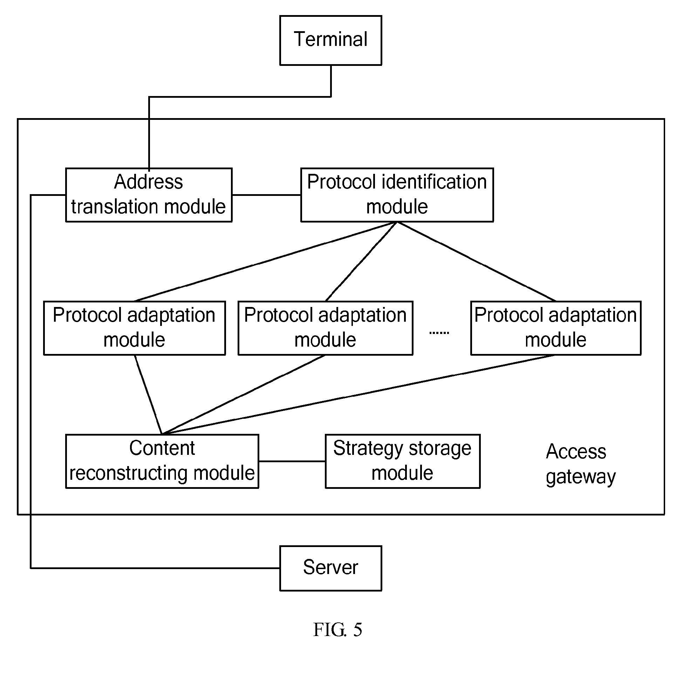

FIG. 5 shows the implementation of the system provided in an embodiment of the present invention in a specific application. The following embodiment describes the specific implementation process of the present invention.

For clarification, two embodiments of sending service requests and service responses respectively described in the present invention are used to describe the message processing method provided in an embodiment of the present invention.

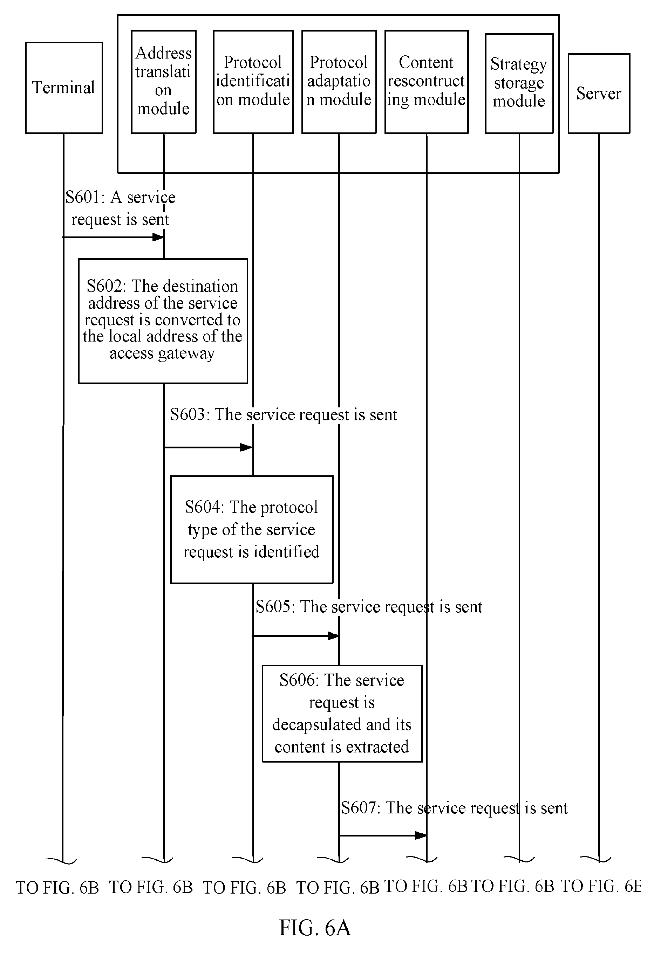

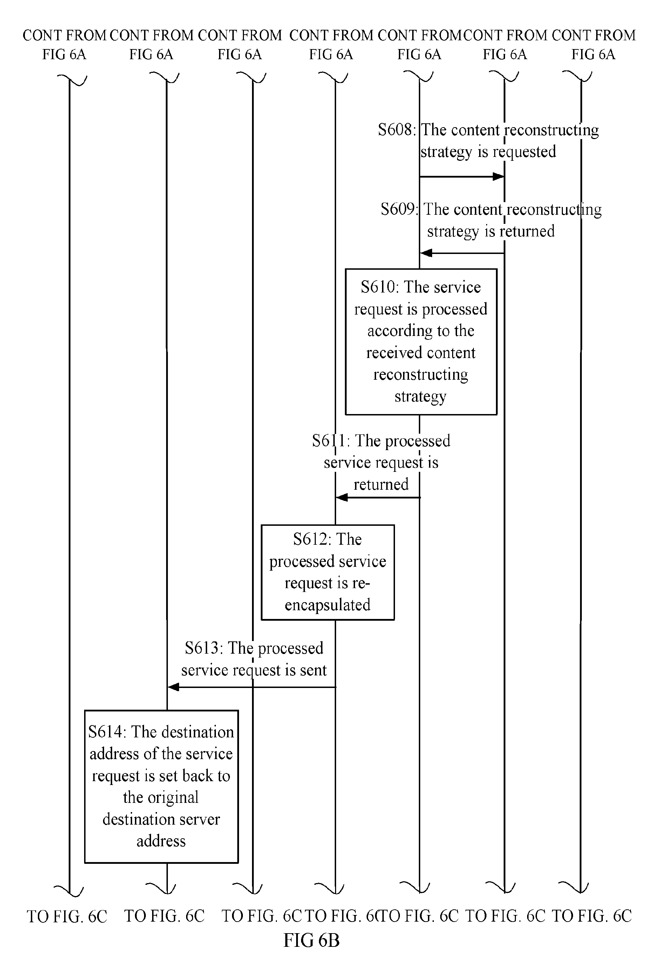

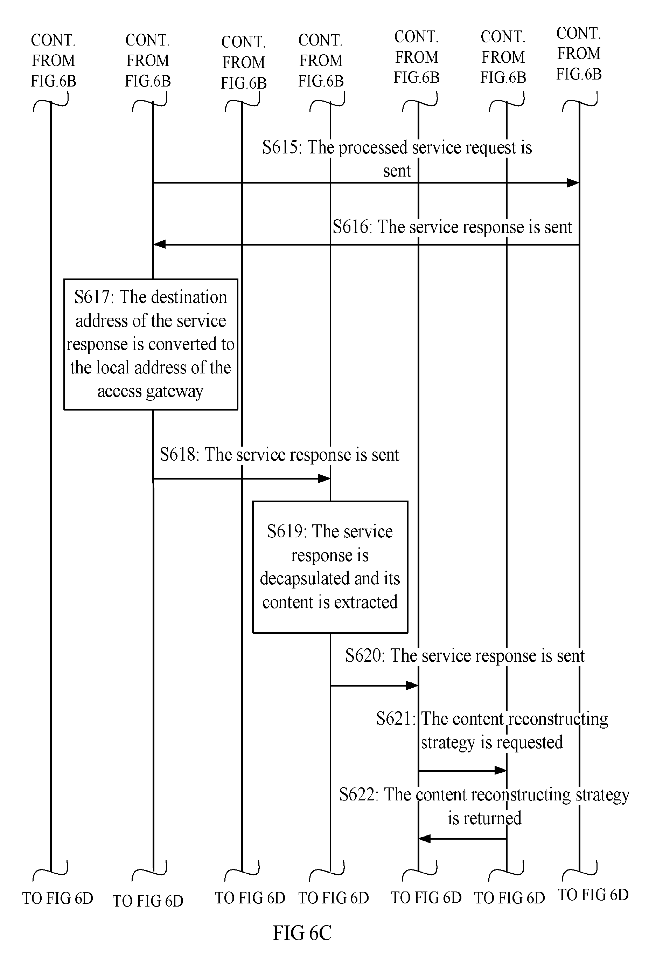

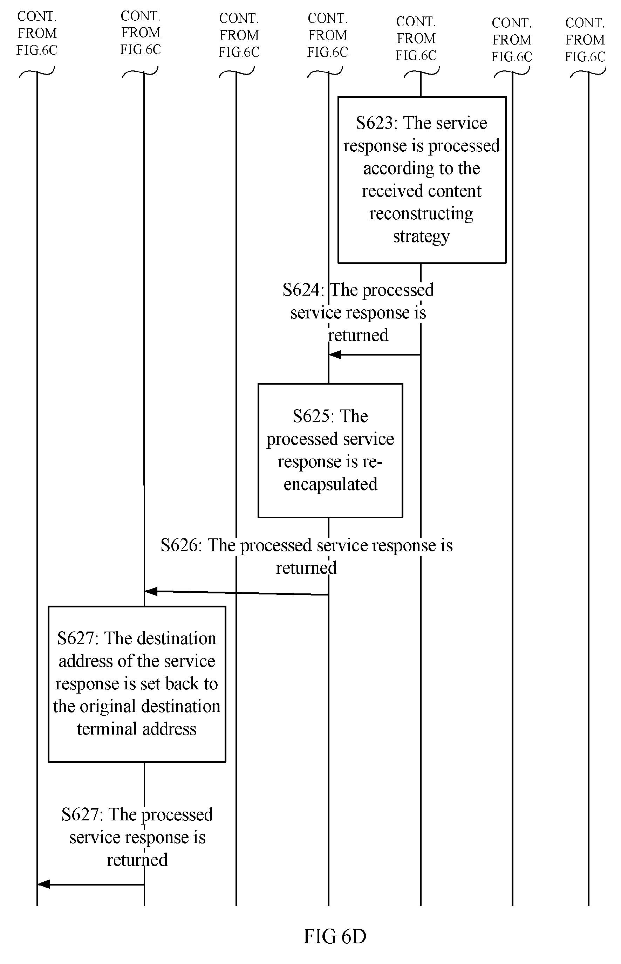

FIG. 6 is a flowchart of a message processing method provided in an embodiment of the present invention. The method comprises the following steps:
S601: A terminal sends a service request.
   A user sends a service request, such as WAP or Web page browsing, email sending or receiving, and streaming media play, to the service access server through a service application on the terminal. The protocol type and parameters of the request varies with services. For example, the user requests a browsing service over HTTP or WAP with a URL address parameter, or requests a streaming media service over RTSP with the address of the streaming media server as a parameter.
S602: The address translation module translates the destination address of the service request into the local address of the access gateway.
   The service request is first sent to the address translation module of the access gateway. The address translation module translates the destination address of the service request into the local IP address of the access gateway so that the upper-layer application can receive the original service request packet.
S603: The service request with the address translated is sent to the protocol identification module.
S604: The protocol identification module identifies the protocol type of the received service request.
   After receiving the original service request, the upper-layer application sends the request to the protocol identification module, which identifies the protocol type through the DPI technology.
S605: According to the protocol type of the service request identified by the protocol identification module, the service request is sent to the corresponding protocol adaptation module.
S606: The protocol adaptation module decapsulates the service request and obtains its content.
   According to the obtained content, the protocol adaptation module determines whether to process the service request.
   If processing is required, S607 is performed; otherwise, S612 is performed.
S607: The service request processed by the protocol adaptation module is sent to the content reconstructing module.
S608: The content reconstructing module requests the content reconstructing policy of the service request from the policy storage module.
S609: The policy storage module returns the content reconstructing policy according to the content of the received service request.
   In the present embodiment, content reconstructing refers to information embedment and content reconstructing policy refers to the information embedment policy, for example, embedding the area ID into the user information within a given area, or embedding the service authentication information of a user into the content of a service request.
S610: The content reconstructing module reconstructs the content of the service request according to the received content reconstructing policy.
   The content reconstructing module processes the original request (for example, embedding the mobile number or IP address of the user) according to the information embedment policy.
S611: The content reconstructing module returns the processed service request to the protocol adaptation module.
5612: The protocol adaptation module re-encapsulates the service request after content reconstruction.
S613: The protocol adaptation module sends the service request after content reconstructing to the address translation module.
   If the destination server of the service request uses a different protocol from the bearer protocol for the original service request, the protocol adaptation module also performs adaptation.
S614: The address translation module translates the destination address of the processed service request into the IP address of the original destination server.
5615: The address translation module sends the service request after content reconstructing to the server.
S616: The server sends a service response to the address translation module.
S617: The address translation module translates the destination address of the service response into the local address of the access gateway.
   The service response is first sent to the address translation module of the access gateway. The address translation module translates the destination address of the service response in to the local IP address of the access gateway so that the upper-layer application can receive and process the original packet.
S618: The protocol type of the service response is identified according to the context of the foregoing session and the service response is sent to the corresponding protocol adaptation module.
S619: The protocol adaptation module decapsulates the service response and extracts its content.
5620: The protocol adaptation module sends the processed service response to the content reconstructing module.
S621: After receiving the service response, the content reconstructing module requests the content reconstructing policy from the policy storage module.
   After receiving the service response, the content reconstructing module requests the information embedment policy from the policy storage module.
S622: The policy storage module returns the content reconstructing policy according to the content of the received service response.
   In this embodiment, the content reconstructing policy returned in this step is an information embedment policy.
S623: The content reconstructing module reconstructs the content of the service response according to the received content reconstructing policy.
   According to the information embedment policy, the content reconstructing module reconstructs the content of the original service response, for example, embedding an advertisement or critical information.
5624: The content reconstructing module returns the service response after content reconstructing to the protocol adaptation module.
S625: The protocol adaptation module re-encapsulates the service response after content reconstructing.
S626: The protocol adaptation module sends the service response after content reconstructing to the address translation module.
   If the destination terminal of the service response uses a different protocol from the bearer protocol for the original service request, the protocol adaptation module also performs adaptation.
S627: The address translation module translates the destination address of the service response after content reconstructing into the address of the original destination terminal.
S628: The address translation module sends the service response after content reconstructing to the terminal.

The technical solution provided in an embodiment of the present invention has the following advantages: The address translation and protocol type-based content reconstructing embed information in the content over different protocols without proxy server settings on the terminal.

Through the embodiments described above, those skilled in the art can understand clearly that the present invention can be implemented through hardware or software combined with a required general hardware platform. Based on the foregoing understanding, the technical solution discussed herein can be embodied through software products, which can be stored on nonvolatile storage media, such as CD-ROM, USB drive or removable hard disk. Combined with certain instructions, these software products enable a computer device, such as a personal computer, a server, and a network device, to implement the methods provided in the embodiments of the present invention.

It is understandable to those skilled in the art that the drawings specified herein illustrate a preferred embodiment only and that modules or workflows described in the drawings are not necessarily required for the implementation of the present invention.

Although the invention is described above through preferred embodiments, the invention is not limited to such embodiments. Those skilled in the art can make various modifications or variations to the invention.

## Claims

1. A message processing method, comprising:
receiving a service message and identifying a protocol type of the service message;
sending the service message to a protocol adaptation module according to the protocol type; and
reconstructing the service message processed by the protocol adaptation module according to a corresponding content reconstructing policy, and sending the reconstructed service message.

2. The message processing method of claim 1, wherein the receiving the service message comprises:
translating a destination address of the service message into a local address.

3. The message processing method of claim 1, wherein the identifying the protocol type of the service message comprises:
identifying the protocol type of the service message through the Deep Packet Inspection (DPI) technology.

4. The message processing method of claim 1, wherein before the reconstructing the service message processed by the protocol adaptation module according to the corresponding content reconstructing policy , the method further comprises:
determining whether to reconstruct the content of the service message;
obtaining the corresponding content reconstructing policy of the service message, if the content reconstruction is required.

5. The message processing method of claim 4, wherein the content reconstructing policy is preset according to the protocol type or service message type.

6. The message processing method of any one of claims 1-5, wherein the reconstructing the service message comprises:
embedding information into the service message.

7. The message processing method of claim 2, wherein the sending the reconstructed service message comprises:
recovering the destination address of the service message; and
sending the service message after the content reconstruction to the destination address.

8. A message processing device, comprising: a protocol identification module, a content reconstructing module, and several protocol adaptation modules; wherein,
the protocol identification module is adapted to identify the protocol type of a service message;
the protocol adaptation module is adapted to process the service message based on the protocol identified by the protocol identification module;
the content reconstructing module is adapted to reconstruct the content of the service message processed by the protocol adaptation module according to the corresponding content reconstructing policy.

9. The message processing device of claim 8, further comprising:
an address translation module, adapted to receive the service message, translate a destination address of the service message into a local address in order to send the service message to the protocol identification module, and recover the destination address of the reconstructed service message in order to send the reconstructed service message to the destination address of the service message.

10. The message processing device of claim 9, wherein the address translation module comprises:
a message receiving sub-module, adapted to receive the service message;
an address translation sub-module, adapted to translate the destination addresses of the service message received by the message receiving sub-module into the local address;
an address recovery sub-module, adapted to recover the destination address of the reconstructed service message; and
a message sending sub-module, adapted to send the reconstructed service message to the destination address recovered by the address recovery sub-module.

11. The message processing device of claim 8, further comprising:
a content reconstruction judgment module, adapted to determine whether to reconstruct content of the service message processed by the protocol adaptation module and send the service message that needs the content reconstruction to the content reconstructing module.

12. The message processing device of claim 8, wherein the content reconstructing module comprises:
a policy obtaining sub-module, adapted to obtain a corresponding content reconstructing policy of the service message; and
a content reconstructing sub-module, adapted to reconstruct the content of the service message according to the corresponding content reconstructing policy of the service message.

13. The message processing device of claim 8, further comprising:
a policy storage module, adapted to store the corresponding content reconstructing policy of the service message.

14. A message processing system comprising a message processing device and a server, wherein
the message processing device is adapted to receive service messages from terminals or the server, identify the protocol type of service messages, send service messages to the corresponding protocol adaptation modules, reconstruct the content of processed service messages according to the corresponding content reconstructing policy, and send service messages with reconstructed content to the destination servers or terminals; and
the server is adapted to receive service messages processed by the message processing device and send service messages to the message processing devices.
